# EUROPEAN PATENT APPLICATION

(11) **EP 4 484 945 A1**
(43) Date of publication of application: **01.01.2025**
(21) Application number: 23759500.4
(22) Date of filing: 12.01.2023
(51) Int. Cl.: G01N 30/46, G01N 30/26, G01N 30/66, G01N 30/88

(54) **GAS ANALYSIS SYSTEM**

(30) Priority: 24.02.2022 JP 2022026556
(71) Applicant: SHIMADZU CORPORATION, Kyoto-shi, Kyoto 604-8511 (JP)
(72) Inventor: LU, Wenjian, Kyoto-shi, Kyoto 604-8511 (JP); SHIBAMOTO, Shigeaki, Kyoto-shi, Kyoto 604-8511 (JP)
(74) Representative: Kilian Kilian & Partner mbB
(86) International application number: PCT/JP2023/000544
(87) International publication number: WO 2023/162494

(57) **Abstract**

A gas analysis system (1) includes a first flow channel (L1) through which sample gas that has passed through a column (41, 42) over helium gas as carrier gas flows, a second flow channel (L2) through which sample gas that has passed through a column (43, 44) over nitrogen gas as carrier gas flows, a TCD (90) that detects components in gas by making use of a difference in thermal conductivity among the components, and a switching module (M3). The switching module (M3) is arranged among the first flow channel (L1), the second flow channel (L2), and the TCD (90), and configured to switch between a first state in which the TCD (90) is connected to the first flow channel (L1) and a second state in which the TCD (90) is connected to the second flow channel (L2).

## Description

### TECHNICAL FIELD

The present disclosure relates to a gas analysis system (gas chromatograph system) including a thermal conductivity detector (which is also referred to as a "TCD" below).

### BACKGROUND ART

Some gas analysis systems detect a component in gas with a TCD. When a difference between a thermal conductivity of a component in sample gas to be detected and a thermal conductivity of carrier gas is small in the gas analysis system that detects a component in gas with the TCD, intensity of a detection signal corresponding to the component in sample gas becomes low and sensitivity becomes low.

In order to address this, a gas analysis system has conventionally been configured such that a first system including a separation column where first carrier gas flows and a TCD and a second system including a separation column where second carrier gas different in component from first carrier gas flows and a TCD are separately provided and the TCD in the second system where second carrier gas flows detects a component small in difference in thermal conductivity of first carrier gas (see NPL 1).

### CITATION LIST

### NON PATENT LITERATURE

NPL 1: Agilent Technologies, Application Note Pub. No. 5989-7438 JAJP "Refinery Gas (RGA) by GC Analysis"

### SUMMARY OF INVENTION

### TECHNICAL PROBLEM

In the conventional gas analysis system disclosed in NPL 1 described above, two TCDs are required for two respective types of carrier gas, and hence the system as a whole disadvantageously increases in size.

The present disclosure was made to solve the problem described above, and an object of the present disclosure is to provide a gas analysis system capable of successively detecting with a single thermal conductivity detector, components in first carrier gas and components in second carrier gas different in type from first carrier gas.

### SOLUTION TO PROBLEM

A gas analysis system according to the present disclosure includes a first column and a second column, each of the first column and the second column separating gas components contained in sample gas, a first supply source and a second supply source that supply first carrier gas and second carrier gas different from each other for carrying sample gas, respectively, a first flow channel through which sample gas that has passed through the first column over first carrier gas flows, a second flow channel through which sample gas that has passed through the second column over second carrier gas flows, a thermal conductivity detector that detects components in gas by making use of a difference in thermal conductivity among the components, and a switching device arranged between the first flow channel, the second flow channel, and the thermal conductivity detector, the switching device being configured to switch between a first state in which the thermal conductivity detector is connected to the first flow channel and a second state in which the thermal conductivity detector is connected to the second flow channel.

According to the gas analysis system, the switching device is arranged among the first flow channel, the second flow channel, and the thermal conductivity detector. By switching a state of the switching device from one to the other of the first state and the second state, a flow channel to which the thermal conductivity detector is connected can be switched from one to the other of the first flow channel and the second flow channel. Therefore, while first carrier gas is maintained as carrier gas that flows through the first column and second carrier gas is maintained as carrier gas that flows through the second column, carrier gas to be supplied to the thermal conductivity detector can be switched from one to the other of first carrier gas and second carrier gas. Consequently, components in first carrier gas and components in second carrier gas can successively be detected by a single thermal conductivity detector.

### ADVANTAGEOUS EFFECTS OF INVENTION

According to the present disclosure, the gas analysis system capable of successively detecting with a single thermal conductivity detector, components in first carrier gas and components in second carrier gas different in type from first carrier gas can be provided.

### BRIEF DESCRIPTION OF DRAWINGS

Fig. 1 is a diagram schematically showing an exemplary configuration of a gas analysis system.
Fig. 2 is a cross-sectional view of a microvalve while the microvalve is open.
Fig. 3 is a cross-sectional view of the microvalve while the microvalve is closed.
Fig. 4 is a diagram (No. 1) showing a state of switching valves and a flow of each gas.
Fig. 5 is a diagram (No. 2) showing a state of switching valves and a flow of each gas.
Fig. 6 is a diagram (No. 3) showing a state of switching valves and a flow of each gas.
Fig. 7 is a diagram (No. 4) showing a state of switching valves and a flow of each gas.
Fig. 8 is a diagram (No. 5) showing a state of switching valves and a flow of each gas.
Fig. 9 is a diagram (No. 6) showing a state of switching valves and a flow of each gas.
Fig. 10 is a diagram (No. 7) showing a state of switching valves and a flow of each gas.
Fig. 11 is a diagram (No. 8) showing a state of switching valves and a flow of each gas.
Fig. 12 is a diagram schematically showing an exemplary configuration of an analyzer.

### DESCRIPTION OF EMBODIMENTS

The present embodiment will be described in detail below with reference to the drawings. The same or corresponding elements in the drawings below have the same reference characters allotted and description thereof will not be repeated.

### [Overall Configuration of System]

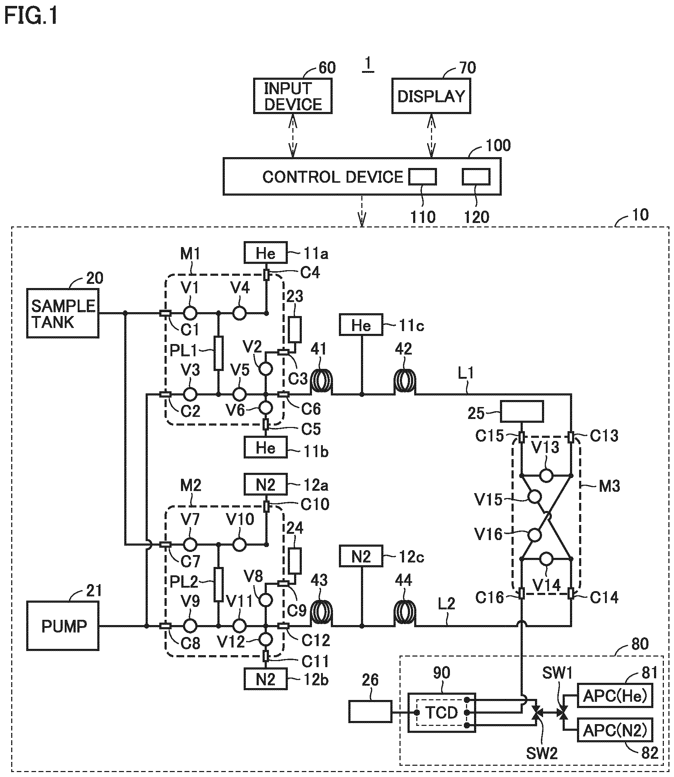

Fig. 1 is a diagram schematically showing an exemplary configuration of a gas analysis system (gas chromatograph system) 1 according to the present embodiment.

Gas analysis system 1 includes an analyzer 10, an input device 60, a display 70, and a controller 100. Analyzer 10 includes carrier gas supply devices 11a to 11c and 12a to 12c, a sample tank 20, a pump 21, vents 23 to 26, sampler modules M1 and M2, a switching module M3, columns 41 to 44, a first flow channel L1, a second flow channel L2, and a detector 80.

Each of carrier gas supply devices 11a to 11c and 12a to 12c regulates a mobile phase called carrier gas to a predetermined pressure and outputs the mobile phase. Carrier gas supply devices 11a to 11c and carrier gas supply devices 12a to 12c output carrier gas different in type from each other. In the present embodiment, carrier gas supply devices 11a to 11c are assumed to output helium gas (He) as a first type of carrier gas and carrier gas supply devices 12a to 12c are assumed to output nitrogen gas (N2) as a second type of carrier gas.

Sample tank 20 is an apparatus where sample gas to be analyzed is stored. Sample tank 20 is connected to sampler modules M1 and M2.

Pump 21 is a suction pump that is connected to a flow channel in sampler modules M1 and M2 and suctions air in sampler modules M1 and M2 to set a pressure in sampler modules M1 and M2 to a negative pressure. The negative pressure here means a pressure lower than the atmospheric pressure, with the atmospheric pressure being defined as the reference.

Vents 23 to 26 allow the flow channel in analyzer 10 to communicate with the outside to emit gas in analyzer 10 to the outside.

Each of sampler modules M1 and M2 and switching module M3 is formed by mount of a plurality of switching valves on a flow channel plate (flow channel member) where a flow channel pattern is formed. Each of modules M1 to M3 is provided with a plurality of connectors (interfaces) for connection of an external device. A flow channel provided in each of modules M1 to M3 is connected to the outside through these connectors.

Sampler module M1 is a device for dispensing a constant amount of sample gas to column 41 over helium gas (He) as carrier gas. Sampler module M1 includes connectors C1 to C6, a sample loop PL1 of a constant volume, switching valves V1 to V6, and a plurality of flow channels that connect these members.

Sample tank 20, vent 23, and pump 21 are connected to connectors C1 to C3, respectively. Carrier gas supply devices 11a and 11b are connected to connectors C4 and C5, respectively. Column 41 is connected to connector C6.

Switching valves V1 and V4 are arranged in this order in the flow channel from connector C1 to connector C4. Switching valves V3, V5, and V6 are arranged in this order in the flow channel from connector C2 to connector C5. Switching valve V2 is arranged in the flow channel that connects the flow channel between switching valves V5 and V6 and connector C3 to each other.

Sample loop PL1 is arranged in the flow channel that connects the flow channel between switching valves V1 and V4 and the flow channel between switching valves V3 and V5 to each other. Sample loop PL1 performs a function to temporarily hold sample gas introduced from sample tank 20 for supply to column 41. As a connection target of sample loop PL1 is switched as appropriate by control of switching valves V1 to V6, sampler module M1 once allows sample loop PL1 to be filled with sample gas supplied from sample tank 20 and thereafter allows supply of sample gas filled in sample loop PL1 to column 41 over helium gas (He) as carrier gas.

Columns 41 and 42 are arranged in series in this order between connector C3 of sampler module M1 and first flow channel L1. Columns 41 and 42 each separate various components contained in sample gas in a temporal direction while supplied sample gas passes through each column over a flow of carrier gas and output the components. Column 41 is a pre-column for primary separation and column 42 is a main column for secondary separation. Carrier gas supply device 11c is connected to a flow channel between column 41 and column 42.

Column 42 and connector C13 of switching module M3 are connected to each other through first flow channel L1. Gas components that flow out of column 42 over helium gas (He) as carrier gas are supplied to switching module M3 through first flow channel L1.

Sampler module M2 is a device for dispensing a constant amount of sample gas to column 43 over nitrogen gas (N2) as carrier gas. Sampler module M2 includes connectors C7 to C12, a sample loop PL2 of a constant volume, switching valves V7 to V12, and a plurality of flow channels that connect these members.

Sample tank 20, vent 24, and pump 21 are connected to connectors C7 to C9, respectively. Carrier gas supply devices 12a and 12b are connected to connectors C10 and C11, respectively. Column 43 is connected to connector C12.

Switching valves V7 and V10 are arranged in this order in the flow channel from connector C7 to connector C10. Switching valves V9, V11, and V12 are arranged in this order in the flow channel from connector C8 to connector C11. Switching valve V8 is arranged in the flow channel through which the flow channel between switching valves V11 and V12 and connector C9 are connected to each other.

Sample loop PL2 is arranged in the flow channel that connects the flow channel between switching valves V7 and V10 and the flow channel between switching valves V9 and V11 to each other. Sample loop PL2 performs a function to temporarily hold sample gas introduced from sample tank 20 for supply to column 41. As a connection target of sample loop PL2 is switched as appropriate by control of switching valves V7 to V12, sampler module M2 once allows sample loop PL2 to be filled with sample gas supplied from sample tank 20 and thereafter allows supply of sample gas filled in sample loop PL1 to column 43 over nitrogen gas (N2) as carrier gas.

Columns 43 and 44 are arranged in series in this order between connector C12 of sampler module M2 and second flow channel L2. Columns 43 and 44 each separate various components contained in sample gas in a temporal direction while supplied sample gas passes through each column over a flow of carrier gas and output the components. Column 43 is a pre-column for primary separation and column 44 is a main column for secondary separation. Carrier gas supply device 12c is connected to the flow channel between column 43 and column 44.

Column 44 and connector C14 of switching module M3 are connected to each other through second flow channel L2. Second flow channel L2 supplies gas components that flow out of column 44 over nitrogen gas (N2) as carrier gas to switching module M3.

Switching module M3 is a device that switches an object to be detected by detector 80 between gas components in helium gas that flows through first flow channel L1 and gas components in nitrogen gas that flows through second flow channel L2.

Switching module M3 includes connectors C13 to C16, switching valves V13 to V16, and a plurality of flow channels through which they are connected. First flow channel L1 and second flow channel L2 are connected to connectors C13 and C14, respectively. Vent 25 is connected to connector C15. Detector 80 is connected to connector C16.

Switching valve V13 is arranged in the flow channel through which the flow channel between connector C15 and switching valve V15 and the flow channel between connector C13 and switching valve V16 are connected to each other. Switching valve V14 is arranged in the flow channel through which the flow channel between connector C16 and switching valve V16 and the flow channel between connector C14 and switching valve V15 are connected to each other. Switching valve V15 is arranged in the flow channel between connector C14 and connector C15. Switching valve V16 is arranged in the flow channel between connector C13 and connector C16.

Switching module M3 is switched between a first state and a second state based on switching of combination of open and closed states of switching valves V13 to V16. When switching module M3 is in the first state, first flow channel L1 and detector 80 communicate with each other so that gas (helium gas) from first flow channel L1 is supplied to detector 80 and second flow channel L2 and vent 25 communicate with each other so that gas (nitrogen gas) from second flow channel L2 is emitted to the outside. When switching module M3 is in the second state, second flow channel L2 and detector 80 communicate with each other so that gas (nitrogen gas) from second flow channel L2 is supplied to detector 80 and first flow channel L1 and vent 25 communicate with each other so that gas (helium gas) from first flow channel L1 is emitted to the outside.

Switching valves V1 to V16 are controllable independently of one another, in response to a command from controller 100.

Detector 80 is connected to connector C16 of switching module M3 and detects gas components supplied from switching module M3. Detector 80 includes automatic pressure controllers (which are each also referred to as an "APC" below) 81 and 82, switch valves SW1 and SW2, and a thermal conductivity detector (TCD) 90.

APC 81 outputs helium gas at a constant pressure as reference gas for TCD 90. APC 82 outputs nitrogen gas at a constant pressure as reference gas for TCD 90. Switch valves SW1 and SW2 are switched to one of a state in which helium gas from APC 81 is set as reference gas to be supplied to TCD 90 and a state in which nitrogen gas from APC 82 is set as reference gas to be supplied to TCD 90.

When switching module M3 is in the first state, helium gas from first flow channel L1 is introduced into TCD 90 as carrier gas. In this case, switch valves SW1 and SW2 are controlled such that helium gas is also set as reference gas to be supplied to TCD 90.

When switching module M3 is in the second state, nitrogen gas from second flow channel L2 is introduced into TCD 90 as carrier gas. In this case, switch valves SW1 and SW2 are controlled such that nitrogen gas is also set as reference gas to be supplied to TCD 90.

TCD 90 detects various components in sample gas introduced from switching module M3 by making use of a difference in thermal conductivity among the components, with reference gas being defined as the reference of comparison. Since a technique to detect components by making use of a difference in thermal conductivity has been known, detailed description will not be provided.

At timing of detection of hydrogen and helium in sample gas, nitrogen gas as carrier gas is employed. Hydrogen and helium are lighter than other components, and eluted earlier than other components whichever separation column may be used. Therefore, at the time of start of analysis, nitrogen gas is employed as carrier gas, and after lapse of timing of detection of hydrogen and helium, carrier gas is immediately switched to helium gas. Since components other than hydrogen and helium are much smaller in value of thermal conductivity than helium, sensitivity of detection of components other than hydrogen and helium can be enhanced by switching of carrier gas to helium gas.

Data indicating a result of detection by TCD 90 is stored in a memory in controller 100 and shown on display 70 in response to a request from a user.

Input device 60 is implemented, for example, by a keyboard or a pointing device such as a mouse, and receives a command from the user. Display 70 is implemented, for example, by a liquid crystal display (LCD) panel, and shows information to the user. When a touch panel is employed as a user interface, input device 60 and display 70 are integrally formed.

Controller 100 includes a processor (central processing unit) 110, a storage device 120, an interface, and the like. Controller 100 controls in an integrated manner, the entire analyzer 10. Controller 100 is connected through a wire or wirelessly, to input device 60 and display 70 which are the user interfaces.

### [Construction of Switching Valves V1 to V16]

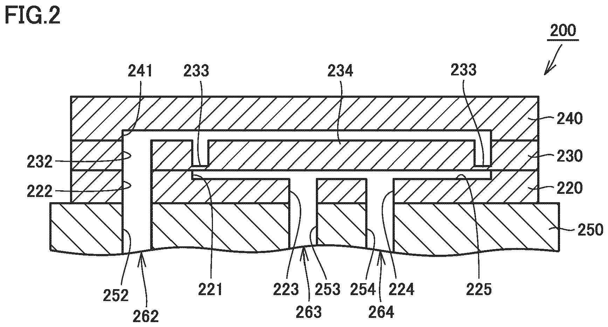

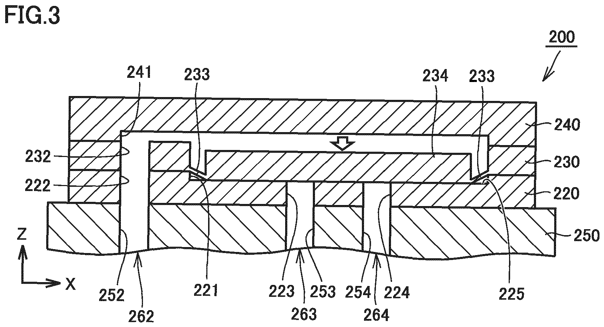

An exemplary construction of switching valves V1 to V16 according to the present embodiment will be described with reference to Figs. 2 and 3. Since switching valves V1 to V16 are identical in basic construction, in Figs. 2 and 3, switching valves V1 to V16 will be described as a microvalve 200, without being distinguished from one another.

Fig. 2 is a cross-sectional view of microvalve 200 while microvalve 200 is open. Fig. 3 is a cross-sectional view of microvalve 200 while microvalve 200 is closed.

Microvalve 200 includes a base layer 220, a diaphragm layer 230, and a cover layer 240, and is in a layered structure in which these are layered in this order. Each of base layer 220, diaphragm layer 230, and cover layer 240 is formed, for example, of silicon oxide or single-crystal silicon to achieve desired strength and flexibility as well as low activity, and micromachined based on the micro electric mechanical systems (MEMS) technology.

Microvalve 200 has a thickness (a dimension in a direction of layering) approximately from 1 to 2 mm. Description may be given below, with a direction from base layer 220 toward cover layer 240 being defined as an upward direction and with a direction from cover layer 240 toward base layer 220 being defined as a downward direction, for the sake of convenience.

Base layer 220 is arranged as a lowermost layer of microvalve 200. Base layer 220 is provided with a recess 221 and openings 222 to 224 that pass through base layer 220. Recess 221 is in a substantially circular shape when base layer 220 is two-dimensionally viewed from above, and it is provided around substantially the center of base layer 220. Recess 221 is recessed from an upper surface side toward a lower surface side of base layer 220. Base layer 220 has a thickness of approximately 150 µm. Recess 221 has a depth from 5 to 20 µm, and preferably has a depth of approximately 10 µm.

Openings 223 and 224 are provided in a bottom 225 of recess 221. As will be described later, openings 223 and 224 define a flow inlet and a flow outlet of sample gas. Opening 222 is provided at a distance from recess 221, at an outer edge around recess 221 of base layer 220. Opening 222 defines a port of supply of fluid (pneumatic fluid) for control of microvalve 200.

Diaphragm layer 230 is arranged as being opposed to base layer 220 on the upper surface side of base layer 220. Diaphragm layer 230 includes an opening 232 that passes through diaphragm layer 230, a rigid portion 234, and a flexible portion 233 provided around rigid portion 234. Flexible portion 233 is smaller in thickness than rigid portion 234 and flexible. With elastic deformation of flexible portion 233, rigid portion 234 is displaced in an upward-downward direction.

Opening 232 is provided at a distance from flexible portion 233 and rigid portion 234. Opening 232 is provided at a position superimposed on opening 222 in base layer 220 when viewed two-dimensionally from above, and it defines, together with opening 222, the port of supply of pneumatic fluid.

Microvalve 200 is used as being connected to a flow channel member (flow channel plate) 250. Flow channel member 250 is provided with openings 252 to 254 at positions corresponding to respective openings 222 to 224 in base layer 220. Opening 252 in flow channel member 250, opening 222 in base layer 220, and opening 232 in diaphragm layer 230 communicate with one another to define a pneumatic fluid supply port 262. Pneumatic fluid is supplied to a recess 241 in cover layer 240 through supply port 262.

Opening 253 in flow channel member 250 communicates with opening 223 in base layer 220 to define a sample gas flow inlet 263. Opening 254 in flow channel member 250 communicates with opening 224 in base layer 220 to define a sample gas flow outlet 264.

Microvalve 200 is what is called a normally open valve which is open in an initial state (normal state) in which pneumatic fluid is not supplied to supply port 262 of flow channel member 250 and closed by supply of pneumatic fluid to supply port 262 of flow channel member 250.

While pneumatic fluid is not supplied to supply port 262 of flow channel member 250, as shown in Fig. 2, rigid portion 234 is held at a distance from bottom 225 of recess 221 in base layer 220. Therefore, an open state in which flow inlet 263 and flow outlet 264 of sample gas communicate with each other is set.

When pneumatic fluid is supplied to supply port 262 of flow channel member 250, rigid portion 234 is displaced downward by being pressed by pneumatic fluid. A lower surface of rigid portion 234 thus comes in intimate contact with bottom 225 of recess 221 in base layer 220 and a closed state in which sample gas flow inlet 263 and sample gas flow outlet 264 are disconnected from each other is set. Instead of drive (displacement) of rigid portion 234 with pneumatic fluid, rigid portion 234 may electrically be driven (displaced) by a piezoelectric element or the like.

### [Analysis Operation by System]

As described above, in gas analysis system 1, switching module M3 is arranged among first flow channel L1 through which components that flow out of columns 41 and 42 over helium gas as carrier gas flows, second flow channel L2 through which components that flow out of columns 43 and 44 over nitrogen gas as carrier gas flows, and detector 80. Gas analysis system 1 can thus successively supply eluted components in first flow channel L1 and eluted components in second flow channel L2 to detector 80 without switching carrier gas in each of columns 41 to 44 in one analysis.

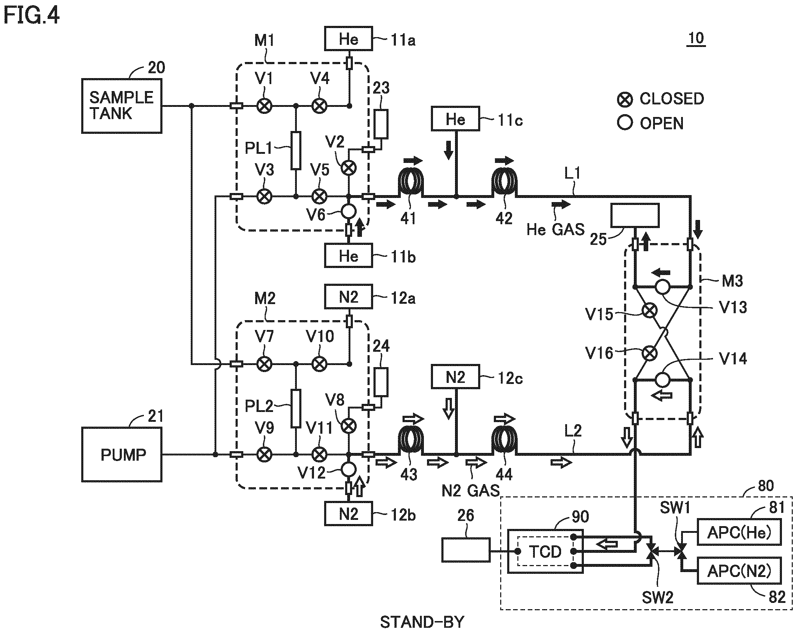

An exemplary analysis operation by gas analysis system 1 will be described below with reference to Figs. 4 to 11. In Figs. 4 to 11, a switching valve labeled with a cross mark is closed and a switching valve not labeled with a cross mark is open. In Figs. 4 to 11, a solid arrow indicates a flow of helium gas (He gas), a hollow arrow indicates a flow of nitrogen gas (N2 gas), and a hatched arrow indicates a flow of sample gas (sample).

During the analysis operation, operations in steps 1 to 9 below are performed in this order.

### (Step 1) Stand-By

Fig. 4 is a diagram showing a state of switching valves V1 to V16 and a flow of each gas during stand-by. During stand-by, switching valves V6, V12, V13, and V14 are open and other switching valves are closed.

He gas from carrier gas supply device 11b thus passes through columns 41 and 42 and is emitted from vent 25 to the outside. N2 gas from carrier gas supply device 12b passes through columns 43 and 44 and the inside of TCD 90, and is emitted from vent 26 to the outside. In order to adapt to this, N2 gas from APC 82 is employed as reference gas for TCD 90.

### (Step 2) Filling with Sample Gas

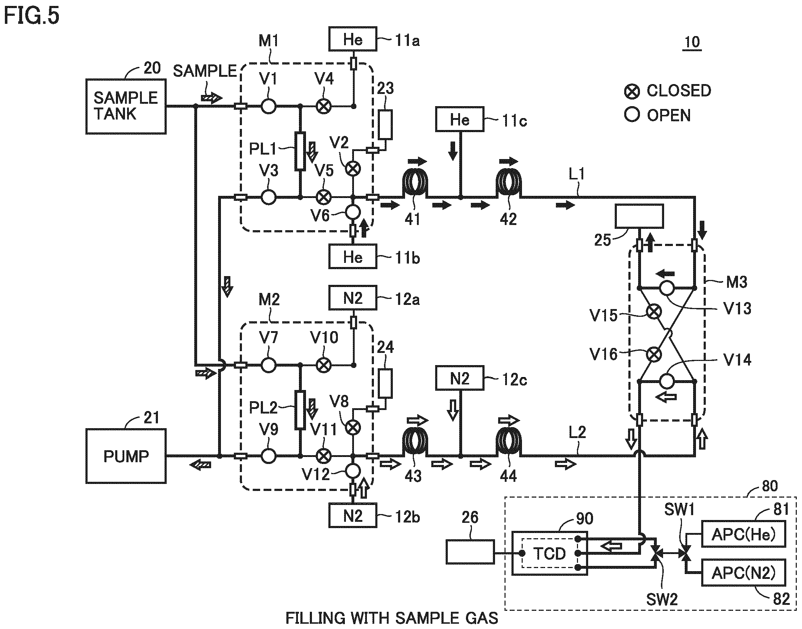

Fig. 5 is a diagram showing a state of switching valves V1 to V16 and a flow of each gas in filling with sample gas. In filling with sample gas, switching valves V1, V3, V6, V7, V9, V12, V13, and V14 are open and other switching valves are closed. In addition, pump 21 is activated. Sample loops PL1 and PL2 are thus filled with sample gas from sample tank 20.

### (Step 3) Pressure Balancing

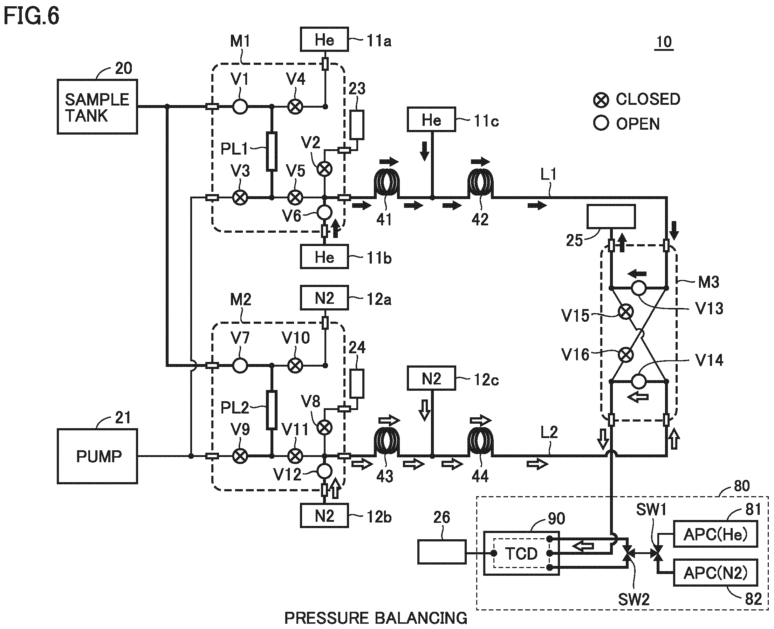

Fig. 6 is a diagram showing a state of switching valves V1 to V16 and a flow of each gas in pressure balancing. In pressure balancing, switching valves V1, V6, V7, V12, V13, and V14 are open and other switching valves are closed.

Since a gas pressure in sample loops PL1 and PL2 is thus in an equilibrium state in which the gas pressure is substantially stable at the atmospheric pressure, an amount of sample gas held in sample loops PL1 and PL2 can be stabilized at a constant amount. A pressure balanced state continues until the gas pressure in sample loops PL1 and PL2 is stabilized.

For the sake of description, sample gas filled in sample loop PL1 is also referred to as "He sample gas" and sample gas filled in sample loop PL2 is also referred to as "N2 sample gas" below.

### (Step 4) Injection of N2 Sample Gas

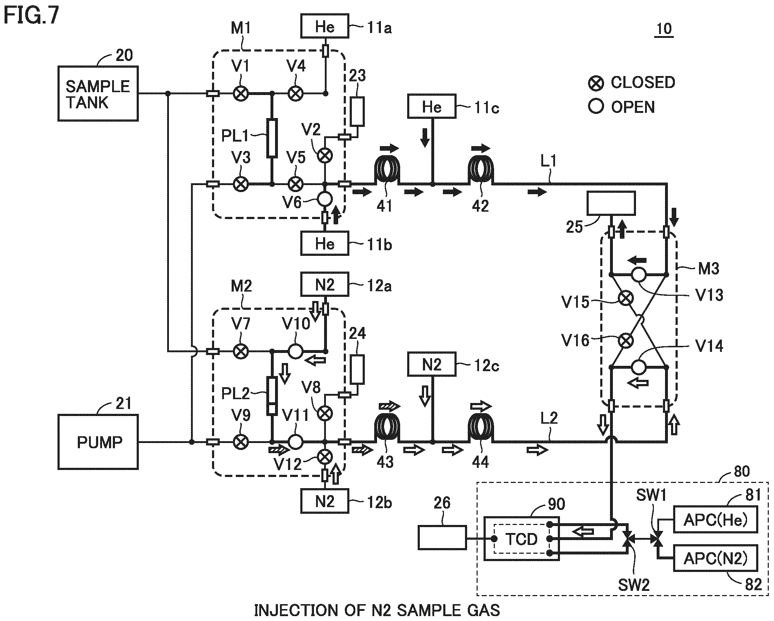

Fig. 7 is a diagram showing a state of switching valves V1 to V16 and a flow of each gas in injection of N2 sample gas. In injection of N2 sample gas, switching valves V6, V10, V11, V13, and V14 are open and other switching valves are closed. Sample gas (N2 sample gas) in sample loop PL2 is thus pushed out by N2 gas from carrier gas supply device 12a and injected into column 43.

### (Step 5) Pre-Separation of N2 Sample Gas

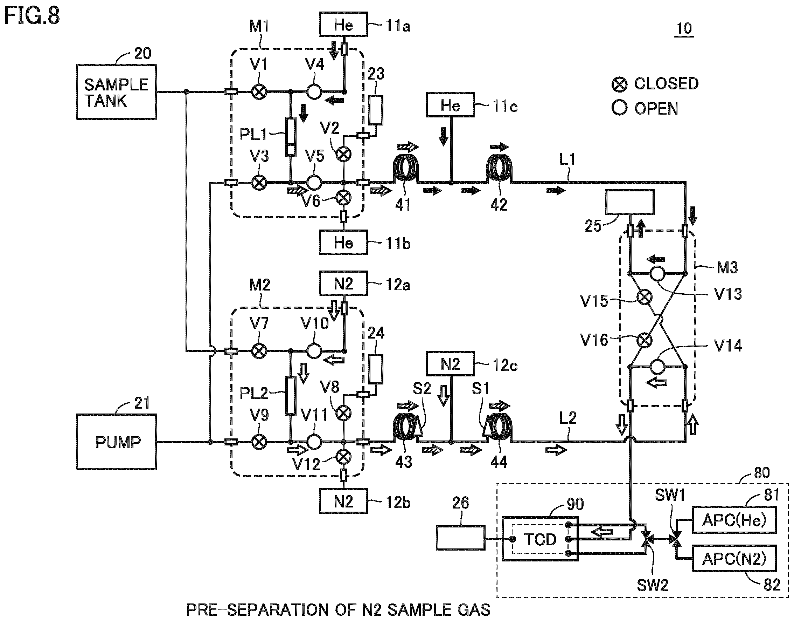

Fig. 8 is a diagram showing a state of switching valves V1 to V16 and a flow of each gas in pre-separation of N2 sample gas. In pre-separation of N2 sample gas, switching valves V4, V6, V10, V11, V13, and V14 are open and other switching valves are closed.

N2 sample gas injected into column 43 is thus separated into a frontal component S1 that is eluted early and a rear component S2 later in elution in column 43, and frontal component S1 is supplied from column 43 to column 44. Frontal component S1 in N2 sample gas is thus secondarily separated in column 43.

In parallel to pre-separation of N2 sample gas, He sample gas filled in sample loop PL1 is pushed out by He gas from carrier gas supply device 11a and injected into column 41. Timing of injection of He sample gas into column 41 (timing of closing of switching valve V6 and opening of switching valves V4 and V5) can be determined by time of arrival of frontal component S1 in N2 sample gas at TCD 90 and a time period from switching of carrier gas to be supplied to TCD 90 until stabilization of a baseline detected by TCD 90.

### (Step 6) Detection of N2 Sample Gas Component

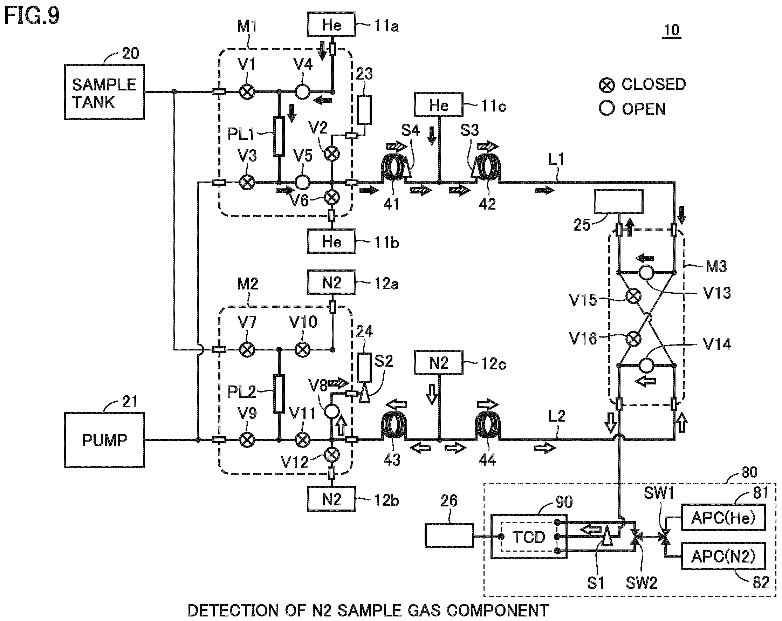

Fig. 9 is a diagram showing a state of switching valves V1 to V16 and a flow of each gas in detection of N2 sample gas. In detection of N2 sample gas, switching valves V4, V5, V8, V13, and V14 are open and other switching valves are closed.

Frontal component S1 in N2 sample gas secondarily separated in column 44 is thus transferred to TCD 90 over N2 gas from carrier gas supply device 12c and detected therein.

Rear component S2 in N2 sample gas that remains in column 43, on the other hand, flows back in column 43 over N2 gas from carrier gas supply device 12c and is emitted from vent 24 to the outside.

He sample gas injected into column 41 is primarily separated into a frontal component S3 that is eluted early and a rear component S4 later in elution in column 41 and frontal component S3 is supplied from column 41 to column 42.

### (Step 7) Carrier Gas Switching

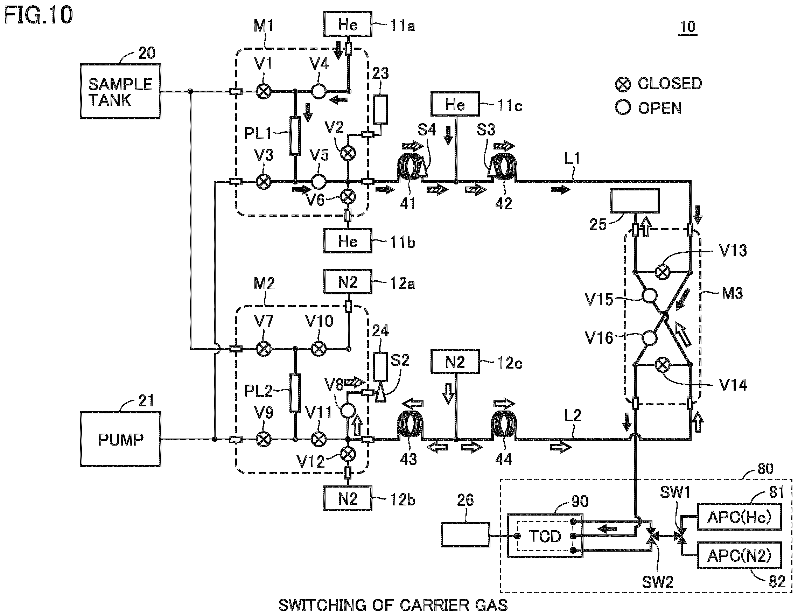

Fig. 10 is a diagram showing a state of switching valves V1 to V16 and a flow of each gas in carrier gas switching. In carrier gas switching, switching valves V4, V5, V8, V15, and V16 are open and other switching valves are closed.

The state of switching module M3 is thus switched from the second state to the first state, and gas supplied to TCD 90 is switched from nitrogen gas from second flow channel L2 to helium gas from first flow channel L1. In order to adapt to this, reference gas for TCD 90 is switched from N2 gas from APC 82 to He gas from APC 81.

### (Step 8) Detection of He Sample Gas Component

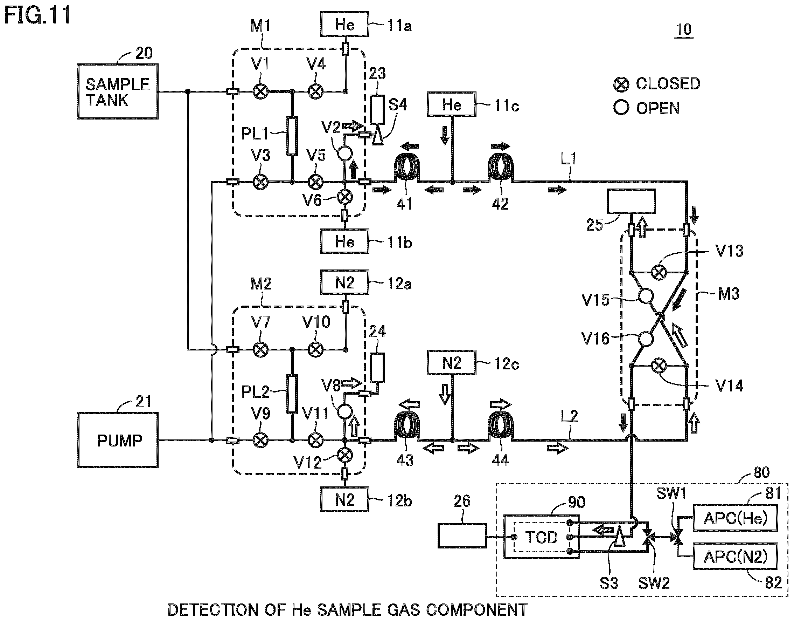

Fig. 11 is a diagram showing a state of switching valves V1 to V16 and a flow of each gas in detection of He sample gas. In detection of He sample gas, switching valves V2, V8, V15, and V16 are open and other switching valves are closed.

Frontal component S3 in He sample gas secondarily separated in column 42 is thus transferred over He gas from carrier gas supply device 11c to TCD 90 and detected therein.

Rear component S4 in He sample gas that remains in column 41, on the other hand, flows back in column 41 over He gas from carrier gas supply device 11c and is emitted from vent 23 to the outside.

### (Step 9) Return to Stand-by State

Thereafter, the state returns to the stand-by state shown in Fig. 4.

As set forth above, gas analysis system 1 according to the present embodiment includes carrier gas supply devices 11a to 11c that supply helium gas as carrier gas, columns 41 and 42 that separate gas components contained in sample gas with helium gas being employed as carrier gas, carrier gas supply devices 12a to 12c that supply nitrogen gas as carrier gas, columns 43 and 44 that separate gas components contained in sample gas with nitrogen gas being employed as carrier gas, first flow channel L1 through which sample gas that has passed through columns 41 and 42 over helium gas as carrier gas flows, second flow channel L2 through which sample gas that has passed through columns 43 and 44 over nitrogen gas as carrier gas flows, TCD 90 that detects components in gas by making use of a difference in thermal conductivity among the components, and switching module M3. Switching module M3 is arranged among first flow channel L1, second flow channel L2, and TCD 90 and configured to switch between a "first state" in which TCD 90 is connected to first flow channel L1 and a "second state" in which TCD 90 is connected to second flow channel L2.

Therefore, while helium gas is maintained as carrier gas that flows through columns 41 and 42 and nitrogen gas is maintained as carrier gas that flows through columns 43 and 44, carrier gas to be supplied to TCD 90 can be switched from one to the other of helium gas and nitrogen gas. Consequently, single TCD 90 can successively detect sample gas components in helium gas and sample gas components in nitrogen gas.

Furthermore, switching module M3 according to the present embodiment is composed of a flow channel through which first flow channel L1, second flow channel L2, and TCD 90 are connected and a plurality of switching valves V13 to V16 provided on the flow channel, switching valves V13 to V16 being controllable independently of one another.

Therefore, switching of carrier gas can be completed earlier than in an example where a rotary valve including a plurality of ports is employed as a switching device that switches carrier gas. Specifically, in the example where the rotary valve including the plurality of ports is employed as the switching device that switches carrier gas, in switching of the flow channel by turning of the valve, half the ports are simultaneously switched in coordination. Consequently, the flow channel configuration becomes complicated and a volume of the flow channel in peripheral piping is also large. Therefore, in switching of carrier gas, a time period for replacement of carrier gas becomes longer and it is difficult to stabilize the baseline of TCD 90 in a short period of time. In contrast, in switching module M3 according to the present embodiment, switching valves V1 to V10 are independently controllable, so that the flow channel configuration can be simplified and the volume of the flow channel in the peripheral piping can also be lowered. Consequently, the time period for replacement of carrier gas can be reduced and the baseline of TCD 90 can be stabilized early, that is, switching of carrier gas can be completed early.

Furthermore, each of the plurality of switching valves V13 to V16 in switching module M3 according to the present embodiment is a microvalve formed by micromachining based on the MEMS technology. Specifically, each of switching valves V13 to V16 includes base layer 220 where opening 223 for introduction of gas into the inside and opening 224 for flow to the outside, of gas introduced through opening 223 are provided and diaphragm layer 230 arranged as being opposed to base layer 220, diaphragm layer 230 elastically deforming to switch flow and cut-off of gas from opening 223 to opening 224.

Since a dead volume in the flow channel in switching module M3 and the inside of each of switching valves V13 to V16 can thus be very low, the time period for replacement of carrier gas can further be reduced and the baseline of TCD 90 can be stabilized earlier.

Furthermore, switching valves V13 to V16 according to the present embodiment are made of silicon. Therefore, accuracy in quantification in analysis can be secured. Specifically, in a rotary valve or a general two-port on/off valve, an inner wall and a sealing portion of a flow channel are made of metal, resin, or rubber. Therefore, a highly adsorbable sample gas component tends to adhere to a surface of the inner wall and the sealing portion of the flow channel, and consequently, an amount of sample gas introduced in TCD 90 decreases, which may cause lowering in accuracy in quantification of analysis. In contrast, since the wall surfaces of the flow channels in switching valves V13 to V16 according to the present embodiment are all formed of silicon oxide or single-crystal silicon low in activity, the sample gas component is less likely to adsorb thereto. Consequently, accuracy in quantification in analysis can be secured.

### <First Modification>

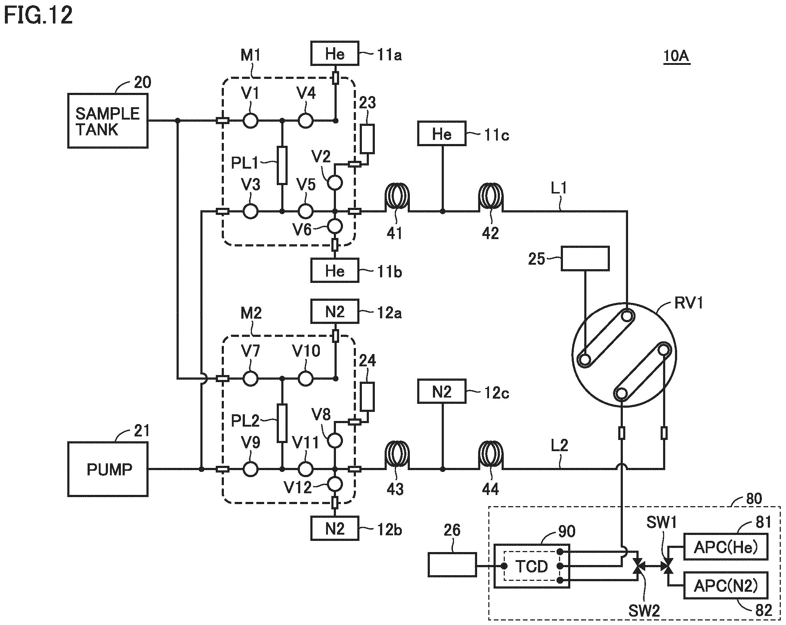

Fig. 12 is a diagram schematically showing an exemplary configuration of an analyzer 10A according to the present first modification. Analyzer 10A includes a rotary valve RV1 in place of switching module M3 in analyzer 10A described above. Analyzer 10A is otherwise identical in configuration to analyzer 10 described above.

According to such a modification, while helium gas is maintained as carrier gas that flows through columns 41 and 42 and nitrogen gas is maintained as carrier gas that flows through columns 43 and 44, carrier gas to be supplied to TCD 90 can be switched from one to the other of helium gas and nitrogen gas.

### [Aspects]

The embodiment and the modification thereof described above are understood by a person skilled in the art as specific examples of aspects below.

(Clause 1) A gas analysis system according to one aspect includes a first column and a second column, each of the first column and the second column separating sample gas into gas components, a first supply source and a second supply source that supply first carrier gas and second carrier gas for carrying sample gas, respectively, the first carrier gas and the second carrier gas being different from each other, a first flow channel through which sample gas portion that has passed through the first column over first carrier gas flows, a second flow channel through which sample gas portion that has passed through the second column over second carrier gas flows, a thermal conductivity detector that detects components in gas based upon thermal conductivity difference for the components, and a switching device arranged among the first flow channel, the second flow channel, and the thermal conductivity detector, the switching device being configured to switch between a first state in which the thermal conductivity detector is connected to the first flow channel and a second state in which the thermal conductivity detector is connected to the second flow channel.

According to the gas analysis system described in Clause 1, the switching device is arranged among the first flow channel, the second flow channel, and the thermal conductivity detector. By switching the state of the switching device from one to the other of the first state and the second state, a flow channel to which the thermal conductivity detector is connected can be switched from one to the other of the first flow channel and the second flow channel. Therefore, while first carrier gas is maintained as carrier gas that flows through the first column and second carrier gas is maintained as carrier gas that flows through the second column, carrier gas to be supplied to the thermal conductivity detector can be switched from one to the other of first carrier gas and second carrier gas. Consequently, components in first carrier gas and components in second carrier gas can successively be detected by a single thermal conductivity detector.

(Clause 2) In the gas analysis system described in Clause 1, the switching device may include a flow channel through which the first flow channel, the second flow channel, and the thermal conductivity detector are connected to one another and a plurality of valves provided on the flow channel, the plurality of valves being controllable independently of one another. The flow channel may be configured to form the first state and the second state in accordance with combination of controlled states of the plurality of valves.

According to the gas analysis system described in Clause 2, the flow channel configuration can be more simplified and a dead volume of the flow channel can be lower than in an example where a rotary valve including a plurality of ports is employed as a switching device that switches carrier gas. Therefore, a time period for replacement of carrier gas can be reduced and switching of carrier gas can be completed early.

(Clause 3) In the gas analysis system described in Clause 2, each of the plurality of valves may include a base portion where a flow inlet for introduction of gas into the inside and a flow outlet for flow to the outside, of gas introduced through the flow inlet are formed and a diaphragm portion arranged as being opposed to the base portion, the diaphragm portion elastically deforming to switch between flow and cut-off of gas from the flow inlet to the flow outlet.

According to the gas analysis system described in Clause 3, since the dead volume in the inside of each valve can be very low, the time period for replacement of carrier gas can further be reduced and switching of carrier gas can be completed earlier.

(Clause 4) In the gas analysis system described in Clause 2 or 3, each of the plurality of valves may be made of silicon.

According to the gas analysis system described in Clause 4, since a wall surface of the flow channel of each valve is made of silicon low in activity, a sample gas component is less likely to adsorb thereto. Consequently, accuracy in quantification in analysis can be secured.

(Clause 5) In the gas analysis system described in any one of Clauses 1 to 4, first carrier gas may be helium gas and second carrier gas may be nitrogen gas.

According to the gas analysis system described in Clause 5, a type of carrier gas to be supplied to the thermal conductivity detector can be switched between helium gas (first carrier gas) and nitrogen gas (second carrier gas).

It should be understood that the embodiment disclosed herein is illustrative and non-restrictive in every respect. The scope of the present invention is defined by the terms of the claims rather than the description of the embodiment above and is intended to include any modifications within the scope and meaning equivalent to the terms of the claims.

### REFERENCE SIGNS LIST

1 gas analysis system; 10, 10A analyzer; 11a to 11c, 12a to 12c carrier gas supply device; 20 sample tank; 21 pump; 23 to 26 vent; 41 to 44 column; 60 input device; 70 display; 80 detector; 90 TCD; 100 controller; 120 storage device; 200 microvalve; 220 base layer; 221, 241 recess; 222 to 224, 232, 252 to 254 opening; 225 bottom; 230 diaphragm layer; 233 flexible portion; 234 rigid portion; 240 cover layer; 250 flow channel member; 262 supply port; 263 flow inlet; 264 flow outlet; C1 to C16 connector; L1 first flow channel; L2 second flow channel; M1, M2 sampler module; M3 switching module; PL1, PL2 sample loop; RV1 rotary valve; SW1, SW2 switch valve; V1 to V16 switching valve.

## Claims

1. A gas analysis system comprising:
a first column and a second column, each of the first column and the second column separating sample gas into gas components;
a first supply source and a second supply source that supply first carrier gas and second carrier gas for carrying sample gas, respectively, the first carrier gas and the second carrier gas being different from each other;
a first flow channel through which sample gas portion that has passed through the first column over first carrier gas flows;
a second flow channel through which sample gas portion that has passed through the second column over second carrier gas flows;
a thermal conductivity detector that detects components in gas based upon thermal conductivity difference for the components; and
a switching device arranged among the first flow channel, the second flow channel, and the thermal conductivity detector, the switching device being configured to switch between a first state in which the thermal conductivity detector is connected to the first flow channel and a second state in which the thermal conductivity detector is connected to the second flow channel.

2. The gas analysis system according to claim 1, wherein
the switching device includes
a flow channel through which the first flow channel, the second flow channel, and the thermal conductivity detector are connected to one another, and
a plurality of valves provided on the flow channel, the plurality of valves being controllable independently of one another,
the flow channel is configured to form the first state and the second state in accordance with combination of controlled states of the plurality of valves.

3. The gas analysis system according to claim 2, wherein
each of the plurality of valves includes
a base portion where a flow inlet for introduction of gas into inside and a flow outlet for flow to outside, of gas introduced through the flow inlet are formed, and
a diaphragm portion arranged as being opposed to the base portion, the diaphragm portion elastically deforming to switch between flow and cut-off of gas from the flow inlet to the flow outlet.

4. The gas analysis system according to claim 2 or 3, wherein
each of the plurality of valves is made of silicon.

5. The gas analysis system according to claim 1, wherein
first carrier gas is helium gas, and
second carrier gas is nitrogen gas.
